# EUROPÄISCHE PATENTSCHRIFT

(11) **EP 0 451 581 B1**
(45) Veröffentlichungstag und Bekanntmachung des Hinweises auf die Patenterteilung: **10.07.1996**
(21) Anmeldenummer: 91104563.1
(22) Anmeldetag: 22.03.1991
(51) Int. Cl.: B65G 17/20, A22B 7/00

(54) **Schlachthof- oder Fleischkühlhaus-Förderer**
Meat conveyor for slaughter-houses or cold-stores
Transporteur pour abattoirs ou entrepôts frigorifiques pour la conservation de la viande

(30) Priorität: 28.03.1990 DE 9003620 U
(43) Veröffentlichungstag der Anmeldung: 16.10.1991
(73) Patentinhaber: Banss Maschinenfabrik GmbH & Co. KG, D-35216 Biedenkopf (DE)
(72) Erfinder: Brunet, Johannes, 3550 Marburg - Wehrda (DE); Künzl, Roland, 3563 Dautphetal - Buchenau (DE)
(74) Vertreter: Klunker . Schmitt-Nilson . Hirsch

(56) Entgegenhaltungen:
- EP-A- 0 273 154
- DD-A- 101 349
- SU-A- 1 234 301

## Beschreibung

Gegenstand der Erfindung ist ein Schlachthof- oder Fleischkühlhaus-Förderer zum Fördern von Fleischhaken längs einer Rohrbahn, mit einer Förderkette, die nach unten ragende, gegenüber der Rohrbahn seitlich versetzte Mitnehmer zum Hintergreifen der Fleischhaken aufweist, dadurch gekennzeichnet, daß die Mitnehmer jeweils einen zu der Rohrbahn hinweisenden, seitlichen Fortsatz zum Hintergreifen des jeweiligen, seitlich der Rohrbahn befindlichen Fleischhakenendbereichs aufweisen; und daß für die der Rohrbahn abgewandte Seite der Mitnehmer eine Führungsschiene vorgesehen ist, die an Tragkonsolen befestigt ist, mit denen die Rohrbahn an einer Tragschiene der Förderkette befestigt ist.

Ein Förderer gemäß dem ersten Teil dieses Anspruchs 1 ist aus dem Dokument SU-A1-1 234 301 bekannt.

Herkömmliche Schlachthof- oder Fleischkühlhaus-Förderer weisen nach unten ragende Mitnehmer auf, die mittig oberhalb der Rohrbahn angeordnet sind bzw. sich bewegen. Diese Ausbildung geht von dem zutreffenden Gesichtspunkt aus, daß es für das Verschieben der Fleischhaken am günstigsten ist, wenn diese etwa in der Mitte ihres Auflagebereichs auf der Rohrbahn von den Mitnehmern hintergriffen und durch die Mitnehmer weitergeschoben werden. Auf diese Art ist am besten sichergestellt, daß die Fleischhaken beim Fördern keine unerwünschte Verdrehung um ihre Hochachse vollführen.

Bei dem erfindungsgemäßen Förderer wird bewußt in Kauf genommen, daß die Fleischhaken an einer an sich weniger günstigen Stelle hintergriffen werden und sich dadurch beim Fördern möglicherweise etwas gegenüber einer zur Rohrbahnlängsachse rechtwinkligen Ebene schrägstellen. Dafür wird als Vorteil erreicht, daß der Bereich oberhalb der Rohrbahn von sich entlangbewegenden Mitnehmern frei ist. Dies ist ganz besonders günstig dort, wo in die Rohrbahn seitlich Weichen einmünden. An den Weicheneinmündungstellen wird aufgrund der Erfindung vermieden, daß die seitlich herankommenden Fleischhaken mit Mitnehmern, wie sie herkömmlich vorhanden wären, kollidieren, was die Gefahr der Beschädigung von Fleischhaken und von Mitnehmern mit sich brächte. In diesem Zusammenhang muß man sich vor Augen halten, daß in Bewegung befindliche Fleischhaken, an denen große Fleischstücke oder Schlachttierhälften hängen, eine sehr beträchtliche kinetische Energie haben.

Durch die Führungsschiene werden unerwünschte, seitliche Auslenkbewegungen der Mitnehmer vermieden.

Bei dem erfindungsgemäßen Förderer ist die Förderkette nach wie vor höher angeordnet als die Rohrbahn. Dies ist für die räumliche Unterbringung der Förderketten-Tragschiene, der Förderkette und des Antrieb des Förderers günstig. Außerdem gestaltet sich der Übergang auf herkömmliche Förderer in Schlachthof- oder Fleischkühlhaus-Bereichen, wo keine Komplikationen der geschilderten Art, insbesondere keine Weichen vorhanden sind, besonders unkompliziert.

Die Erfindung und Ausgestaltungen der Erfindung werden nachfolgend anhand eines Ausführungsbeispiels noch näher erläutert. Es zeigt:
- Fig. 1: einen Kettenförderer mitsamt Rohrbahn und Fleischhaken im Querschnitt quer zur Förderrichtung;
- Fig. 2: eine schematisierte Draufsicht auf einen Schlachthof- oder Fleischkühlhaus-Bereich, wo mehrere seitliche Rohrbahnen mit Weichen in eine Rohrbahn einmünden.

Der Förderer 2 besteht, wie herkömmliche Förderer, im wesentlichen aus einer Tragschiene 4, einer Förderkette 6, Paaren von Laufrollen, die beabstandet längs der Förderkette 6 vorgesehen sind und an der Tragschiene 4 abrollen, sowie nach unten ragenden Mitnehmern 8. Die Tragschiene besteht im wesentlichen aus zwei U-Stahlprofilen 10, die mit ihren offenen Seiten einander zugewandt sind und einen gegenseitigen Abstand haben. Die Förderkette besteht abwechselnd aus im wesentlichen waagerecht liegenden Kettengliedern und im wesentlichen senkrecht stehenden Kettengliedern. Jeweils im Abstand mehrerer Kettenglieder sind an der Förderkette 6 nach unten ragende, gabelförmige Rollentragteile 12 angeschraubt. Jedes Rollentragteil 12 trägt links außen und rechts außen jeweils eine Laufrolle 14, die auf der Oberseite des unteren, waagerechten Schenkels der betreffenden Tragschienenhälfte abrollt. An jedem Tragteil 12 ist ein nach unten ragender Mitnehmer 8 befestigt. Die Tragteile 12 ragen nach oben und die Mitnehmer 8 nach unten aus dem beschriebenen Abstandsschlitz zwischen den Stahlprofilen 10.

An der Tragschiene 4 sind mit gegenseitigem Längsabstand Tragkonsolen 16 angeschweißt, die eine im wesentlichen L-förmige Gestalt haben. Eine Rohrbahn 18 ist auf den Endbereichen der waagerechten Schenkel mehrerer Tragkonsolen 16 befestigt. Auf der Rohrbahn 18 hängen Fleischhaken 20, die etwa die obere Hälfte der Rohrbahn 18 umgreifen.

Die Ausbildung ist derart, daß die Mitnehmer 8 seitlich gegenüber der Rohrbahn 18 versetzt sind und etwa bis zur Mitte der Rohrbahn 18 hinabragen. Auf ihrer der Rohrbahn 18 zugewandten Seite weisen die Mitnehmer 8 jeweils einen seitlichen, zu der Rohrbahn 18 hinweisenden Fortsatz 22 auf, der etwas oberhalb der Mitte der Rohrbahn 18 angeordnet ist. Auf diese Weise können die Fortsätze 22 den seitlich der Rohrbahn befindlichen Endbereich 24 des jeweiligen Fleischhakens 20 hintergreifen.

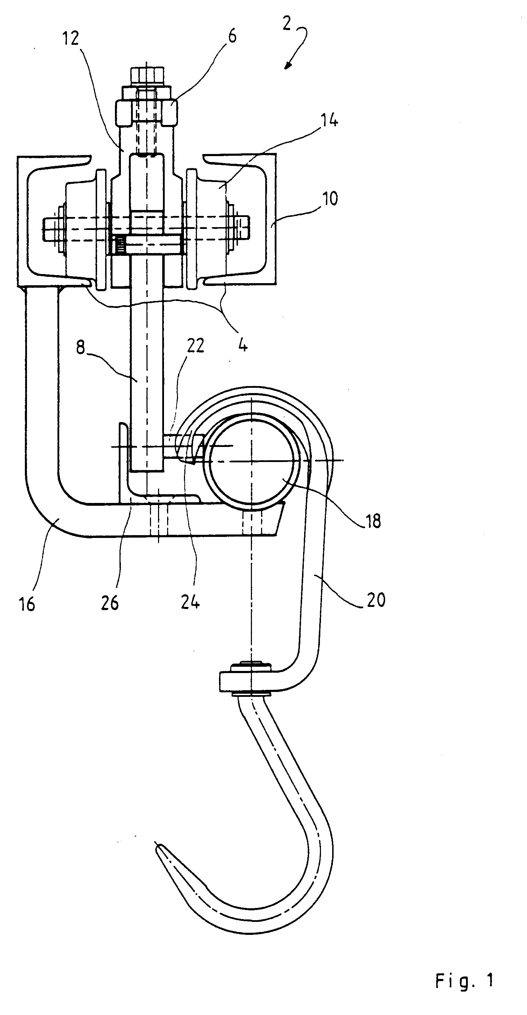

In Fig. 1 erkennt man ferner, daß auf den waagerechten Schenkeln mehrerer Tragkonsolen 16 eine Führungsschiene 26 in Gestalt eines Winkelprofils aus Stahl befestigt ist. Die Führungsschine ist so angeordnet, daß sie ein seitliches Ausweichen der Mitnehmer 8 in Richtung von der Rohrbahn 18 weg verhindert.

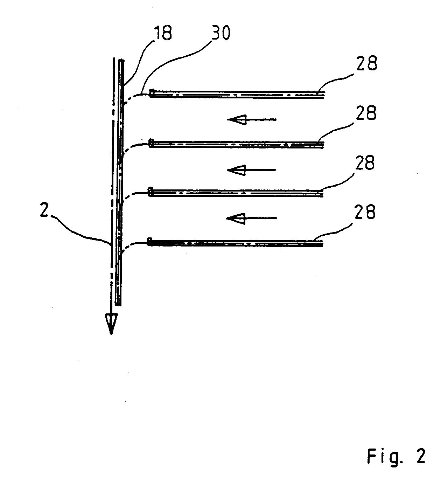

In Fig. 2 ist veranschaulicht, wie die Situation ist, wenn längs der beschriebenen Rohrbahn 18 mehrere seitliche Rohrbahnen 28 hintereinander einmünden. Dies erfolgt mittels sogenannter Aufgleitweichen 30, die von der betreffenden seitlichen Rohrbahn 28 zu der Hauptrohrbahn 18 ein Gefälle haben. Längs der seitlichen Rohrbahnen 28 werden an Fleischhaken hängende Schlachttierteile mittels nicht dargestellter, beispielsweise konventioneller Förderer oder manuell in Fig. 2 von rechts nach links gefördert. Am linken Ende der betreffenden seitlichen Rohrbahn 28 gelangen die Fleischhaken 20 auf eine Aufgleitweiche 30 und rutschen dort aufgrund des geschilderten Gefälles mit Schwung weiter auf die Hauptrohrbahn 18. Da im Bereich oberhalb der Hauptrohrbahn 18 keine Mitnehmer eines Förderers im Weg sind, läuft dies ohne Gefahr von Beschädigungen der Fleichhaken 20 und von Mitnehmern 8 ab. Wenn die Fleischhaken 20 von der betreffenden Aufgleitweiche 30 ordnungsgemäß auf die Haupt-Rohrbahn 18 gelangt sind, haben sie eine derartige Höhenposition erreicht, daß ihr seitlicher Endbereich 24 von einem Mitnehmer-Fortsatz 22 hintergriffen werden kann.

Aus Übersichtsgründen wurde in Fig. 1 der konventionelle Antrieb der Förderkette 6 nicht eingezeichnet. Die Förderkette 6 ist eine Endloskette, die am Anfang und am Ende der Förderstrecke jeweils um ein Kettenrad geführt ist; eines der beiden Kettenräder ist angetrieben, üblicherweise mittels eines Elektromotors. Der Förderer wird je nach Anforderungen in unterschiedlichen, definierten Längen geliefert und im Schlachthof bzw. Fleischkühlhaus eingebaut.

## Patentansprüche

1. Schlachthof- oder Fleischkühlhaus-Förderer (2) zum Fördern von Fleischhaken (20) längs einer Rohrbahn (18), mit einer Förderkette (6), die nach unten ragende, gegenüber der Rohrbahn (18) seitlich versetzte Mitnehmer (8) zum Hintergreifen der Fleischhaken (20) aufweist,
**dadurch gekennzeichnet,**
daß die Mitnehmer (8) jeweils einen zu der Rohrbahn (18) hinweisenden, seitlichen Fortsatz (22) zum Hintergreifen des jeweiligen, seitlich der Rohrbahn (18) befindlichen Fleischhakenendbereichs (24) aufweisen;
und daß für die der Rohrbahn (18) abgewandte Seite der Mitnehmer (8) eine Führungsschiene (26) vorgesehen ist, die an Tragkonsolen (16) befestigt ist, mit denen die Rohrbahn (18) an einer Tragschiene (4) der Förderkette (6) befestigt ist.

2. Förderer (2) nach Anspruch 1,
**dadurch gekennzeichnet,**
daß er in einem Bereich der Rohrbahn (18) vorgesehen ist, in dem von der den Mitnehmern (8) entgegengesetzten Seite her mindestens eine Weiche (30) in die Rohrbahn (18) einmündet.

## Claims

1. A slaughterhouse or meat cold storage conveyor (2) for conveying meat hooks (20)along a tubular track (18), said conveyor comprising a conveyor chain (6) having downwardly projecting drivers (8) laterally offset from the tubular track (18) and serving for engaging behind the meat hooks (20),
characterized in that the drivers (8) each have a lateral extension (22) directed towards the tubular track (18) for engaging behind the particular meat hook end portion (24) located laterally of the tubular track (18);
and in that for the side of the drivers (8) directed away from the tubular track (18) there is provided a guide rail (26) mounted on supporting brackets (16) by means of which the tubular track (18) is attached to a supporting rail (4) of the conveyor chain (6).

2. A conveyor (2) according to claim 1,
characterized in that it is provided in a portion of the tubular track (18) in which at least one junction (30) enters the tubular track (18) from the side opposite to the drivers (8).

## Revendications

1. Convoyeur (2) pour abattoir ou pour entrepôt frigorifique à viande, destiné à transporter des crochets à viande (20), le long d'une piste tubulaire (18), avec une chaîne de transport (6), présentant des organes d'entraînement (8) décalés latéralement par rapport à la piste tubulaire (18) et se projetant vers le bas, pour saisir par l'arrière les crochets à viande 20, caractérisé en ce que
les organes d'entraînement (8) présentent chacun un prolongement (22) latéral tourné vers la piste tubulaire (18), destiné à saisir par l'arrière la zone d'extrémité (24) respective du crochet à viande, qui se trouve sur le côté de la piste tubulaire (18);
et en ce qu'un rail de guidage (26), fixé sur des consoles support (16) à l'aide desquels la piste tubulaire (18) est fixée sur un rail support (4) de la chaîne de transport (6), est prévu pour la face, opposée à la piste tubulaire (18), des organes d'entraînement (8).

2. Convoyeur (2) selon la revendication 1, caractérisé en ce qu'il est prévu dans une zone de la piste tubulaire (18) dans laquelle au moins un aiguillage (30) pénètre dans la piste tubulaire (28), depuis le côté opposé aux organes d'entraînement (8).
